# EUROPEAN PATENT APPLICATION

(11) **EP 4 618 574 A1**
(43) Date of publication of application: **17.09.2025**
(21) Application number: 23889188.1
(22) Date of filing: 09.11.2023
(51) Int. Cl.: H04N 23/57, H04N 23/54, H04N 23/55, H04N 23/51, H05K 9/00, H04N 23/50

(54) **CAMERA MODULE**

(30) Priority: 10.11.2022 KR 20220149977; 25.01.2023 KR 20230009778
(71) Applicant: LG INNOTEK CO. LTD, Gangseo-gu Seoul 07796 (KR)
(72) Inventor: KIM, Kwang Sung, Seoul 07796 (KR)
(74) Representative: M. Zardi & Co S.A.
(86) International application number: PCT/KR2023/018011
(87) International publication number: WO 2024/101931

(57) **Abstract**

This camera module comprises: a front body comprising a hole; a lens module having at least a portion thereof coupled to the hole; a rear body coupled to the rear surface of the front body; and a substrate module that is disposed within the rear body and comprises a first substrate on which an image sensor is disposed, a second substrate disposed at the rear of the first substrate, and a shield member coupled to the first substrate and the second substrate, wherein the second substrate has a protrusion formed on a side surface thereof, the shield member comprises a coupling hole into which the protrusion is coupled, and the protrusion has a cross-sectional area smaller than the cross-sectional area of the coupling hole.

## Description

### [Technical Field]

The present embodiment relates to a camera module.

### [Background Art]

Recently, ultra-small camera modules have been developed and are widely used in small electronic products such as smartphones, laptops, and game consoles.

As automobiles become more popular, ultra-small cameras are widely used in vehicles as well as in small electronic products. For example, black box cameras for vehicle protection or objective data on traffic accidents, rear surveillance cameras that allow drivers to monitor the blind spots at the rear of the vehicle through a screen to ensure safety when reversing, and surrounding detection cameras that can monitor the surroundings of the vehicle are provided.

In the case of a camera module mounted on a vehicle, multiple substrates may be disposed within, and a structure capable of fixing multiple substrates in a state of being spaced apart within the camera module is required.

### [Detailed Description of the Invention]

### [Technical Subject]

The present embodiment is intended to provide a camera module that can support multiple substrates and at the same time compensate for assembly tolerances between multiple parts so that they can be firmly coupled to one another.

### [Technical Solution]

A camera module according to the present embodiment comprises: a front body including a hole; a lens module having at least a portion thereof being coupled to the hole; a rear body being coupled to a rear surface of the front body; and a substrate module being disposed within the rear body, wherein the substrate module comprises: a first substrate on which an image sensor is disposed; a second substrate being disposed at the rear of the first substrate; and a shield member being coupled to the first substrate and the second substrate, wherein a protrusion is formed on a side surface of the second substrate, wherein the shield member includes a coupling hole into which the protrusion is coupled, and wherein the cross-sectional area of the protrusion is smaller than the cross-sectional area of the coupling hole.

The inner surface of the coupling hole includes: a first surface; a second surface being disposed opposite to the first surface; a third surface connecting the first surface and the second surface; and a fourth surface connecting the first surface and the second surface and opposite to the third surface, wherein an outer surface of the protrusion can be in contact with any one surface among the first to fourth surfaces.

The outer surface of the protrusion can be spaced apart from any one among the first to fourth surfaces and the other three surfaces.

The shield member includes a fence portion being disposed between the first substrate and the second substrate; and a coupling portion being protruded downward from a lower end of the fence portion and having the coupling hole formed therein, wherein a groove into which the coupling portion is coupled is formed on a side surface of the second substrate, and wherein the protrusion can be disposed on a bottom surface of the groove.

On an outside of an area being connected to an upper end of the connecting portion among a lower surface of the fence portion, a slit having a shape being recessed upward more than other areas may be disposed.

It may include a contact portion being extended downward from a lower end of the coupling portion and being in contact with an inner surface of the rear body.

The contact portion may include a first area being extended downwardly from a lower end of the coupling portion; a second area being extended downwardly from a lower end of the first area; and a bending portion being disposed between the first area and the second area and in contact with an inner surface of the rear body.

The contact portion may have elasticity such that an outer surface of the bending portion presses an inner surface of the rear body.

The first area may be disposed so as to be inclined so that the distance to an inner surface of the rear body becomes closer as it goes downward, and the second area may be disposed so as to be inclined so that the distance to an inner surface of the rear body becomes farther as it goes downward.

The length of the protrusion in a first direction may be 0.4 mm to 0.6 mm or less of the length of the coupling hole in a first direction, and the length of the protrusion in a second direction perpendicular to a first direction may be 0.2 mm to 0.3 mm or less of the length of the coupling hole in a second direction.

### [Advantageous Effects]

Through the present embodiment, the assembly tolerance is compensated for by the multiple directional movements of the second substrate to which the connector is coupled through the gap between the protrusion and the coupling hole, so there is an advantage in that the coupling of the rear body can be made easier.

In addition, there is an advantage in that the substrate module within the rear body can be more firmly fixed by the contact structure between the shield member and the rear body.

### [Brief Description of Drawings]

FIG. 1 is a perspective view illustrating the outer appearance of a camera module according to an embodiment of the present invention.
FIG. 2 is a drawing illustrating FIG. 1 except for a rear body.
FIG. 3 is a cross-sectional view of a camera module according to an embodiment of the present invention.
FIG. 4 is a perspective view of a substrate module according to an embodiment of the present invention.
FIG. 5 is an exploded perspective view of a camera module according to an embodiment of the present invention.
FIG. 6 is an enlarged view illustrating a coupling structure of a shield member and a second substrate according to an embodiment of the present invention.
FIG. 7 is a view illustrating a coupling structure between a rear body and a shield member according to an embodiment of the present invention.
FIG. 8 is a perspective view of a vehicle according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used hereinafter is defined as the optical axis direction of the lens. Meanwhile, the 'optical axis direction' may correspond to 'up-down direction', 'z-axis direction', and the like.

Hereinafter, the present invention will be described in more detail with reference to the attached drawings.

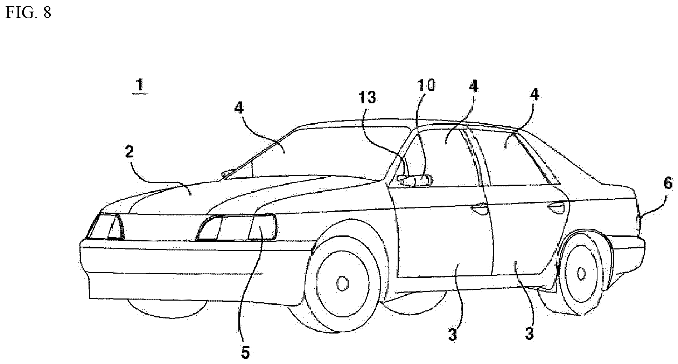

FIG. 8 is a perspective view of a vehicle according to an embodiment of the present invention.

Referring to FIG. 8, a vehicle **1** according to an embodiment of the present invention may include a body **2,** a door **3,** glass **4,** a headlamp **5,** a tail lamp **6,** and a camera module **10.**

The body **2** may be an exterior member of the vehicle **1.** The body **2** may have various forms, such as a frame type and a monocoque type. One or more doors **3** may be coupled to a side surface of the body **2.** In addition, the glass **4** may be coupled to the front and rear a portion where a pillar is formed of the upper portion of the body **2** and the door **3.** The headlamp **5** may be mounted on the front of the lower portion of the body **2.** The tail lamp **6** may be mounted on the rear of the lower portion of the body **2.**

A camera module **10** may be installed on a side portion of the body **2** or on a door being disposed at the front of one or more of the doors **3.** The camera module **10** may be installed in front of the glass **4** coupled to the door **3.** That is, a side mirror in the vehicle **1** of the present embodiment may be redisposed with the camera module **10.**

The camera module **10** can photograph images of both rear sides of the vehicle. Images photographed by the camera module **10** can be electrically connected to a display unit (not shown) through an electronic control unit (ECU), and the like. Accordingly, images photographed by the camera module **10** can be controlled by the electronic control unit (ECU) and played back on the display unit.

An interior space for a driver can be formed within the body **2.** A display unit can be installed within the body **2.** The display unit can output an image photographed by the camera module **10.** The display unit can be installed on a dashboard (not shown) within the body **2.**

The installation form of the camera module **10** within the vehicle **1** described above is exemplary, and the camera module **10** can be used in one or more among a front camera, a side camera, a rear camera, and a black box of the vehicle **1.**

Hereinafter, a camera module according to an embodiment is described with reference to the drawings.

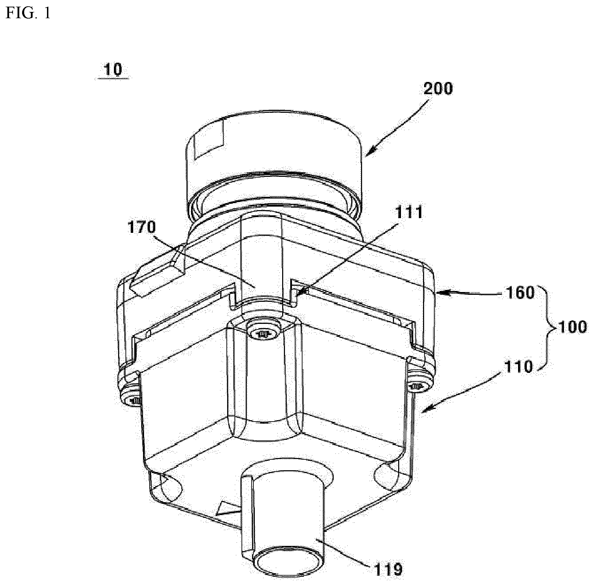

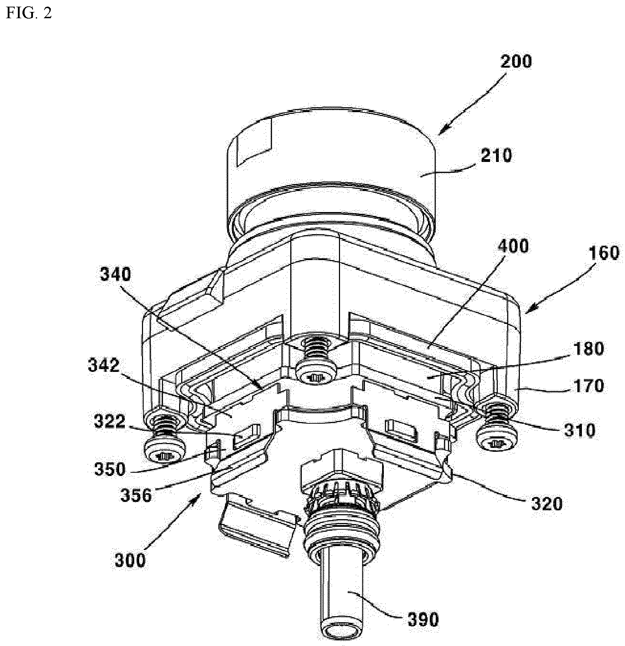

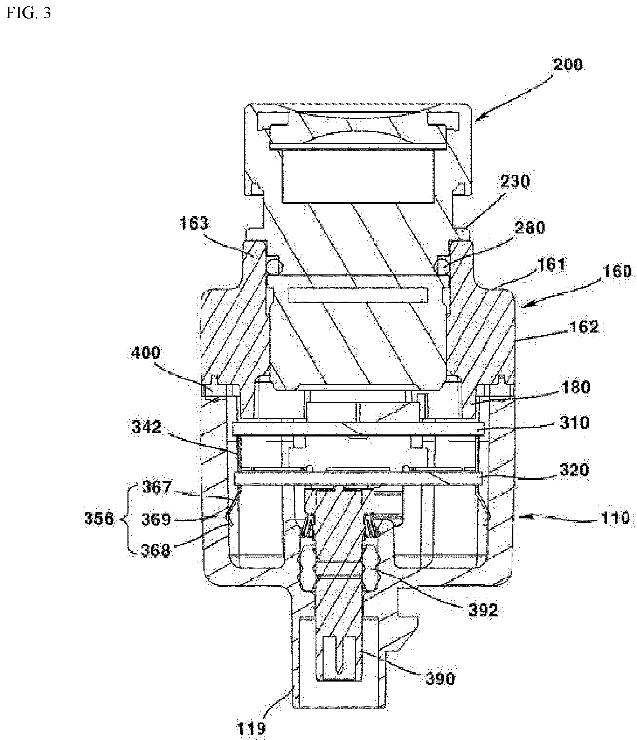

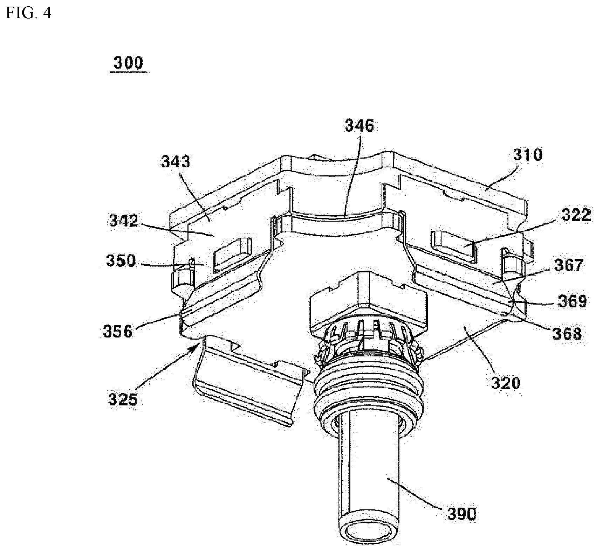

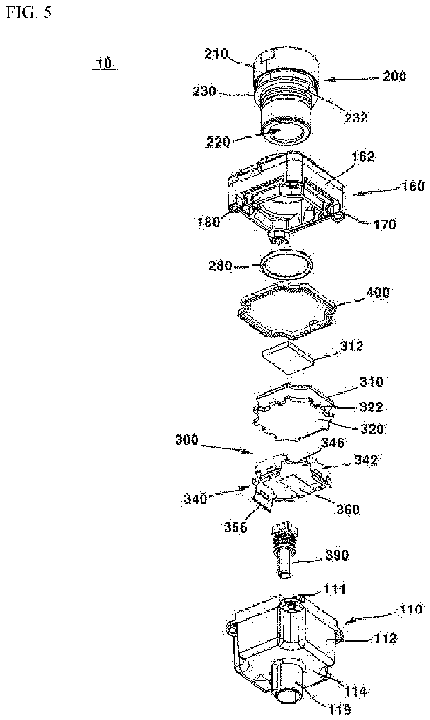

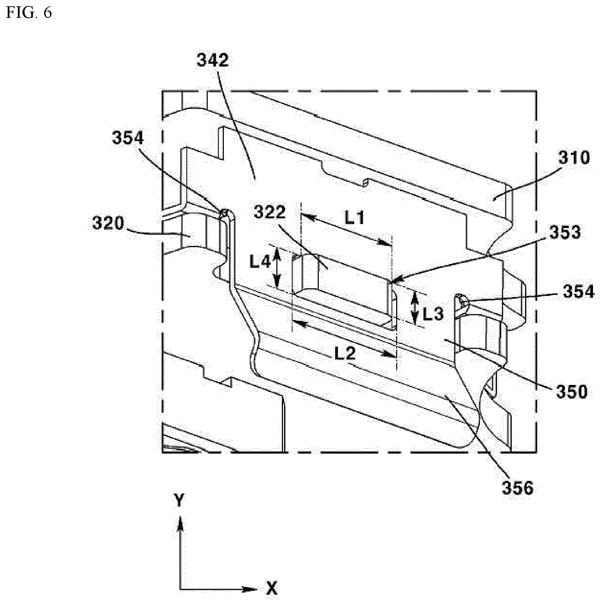

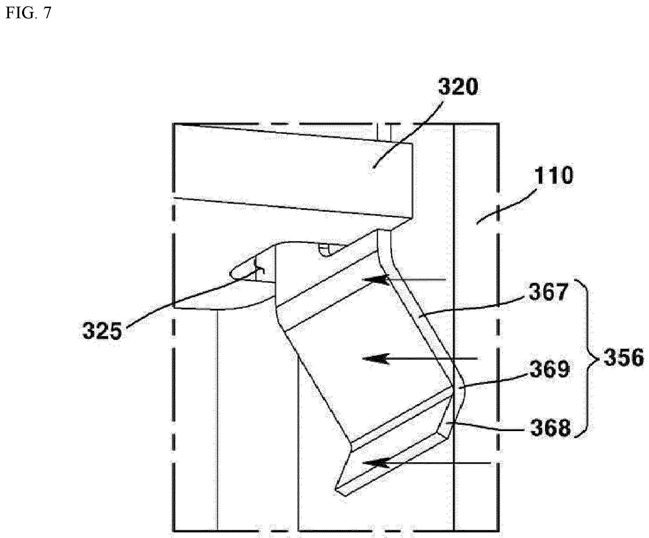

FIG. 1 is a perspective view illustrating the outer appearance of a camera module according to an embodiment of the present invention; FIG. 2 is a drawing illustrating FIG. 1 except for a rear body; FIG. 3 is a cross-sectional view of a camera module according to an embodiment of the present invention; FIG. 4 is a perspective view of a substrate module according to an embodiment of the present invention; FIG. 5 is an exploded perspective view of a camera module according to an embodiment of the present invention; FIG. 6 is an enlarged view illustrating a coupling structure of a shield member and a second substrate according to an embodiment of the present invention; and FIG. 7 is a view illustrating a coupling structure between a rear body and a shield member according to an embodiment of the present invention.

Referring to FIGS. 1 to 7, a camera module **10** according to an embodiment of the present invention may comprises a rear body **110,** a front body **160,** a lens module **200,** a substrate module **300,** and a sealing member **400,** but may be implemented excluding some of the configurations, and additional configurations are not excluded.

The camera module **10** may include a rear body **110.** The rear body **110** may be named any one of a first body, a lower housing, and a first housing. The rear body **110** may include a space therein to accommodate the substrate module **300.** The space may be opened upward. The space may be covered by the front body **160.** The rear body **100** may include a rectangular cross-sectional shape.

The rear body **110** may include a first side plate **112** and a bottom plate **114.** The first side plate **112** may form a side surface of the rear body **110.** The first side plate **112** may have a shape being bent from an edge of the bottom plate **114** and extended upward. The first side plate **112** may include four side plates. Each of the four first side plates **112** may have a square plate shape. The corner areas where the plurality of first side plates **112** is adjacent may have a groove shape being recessed inward more than other areas.

The bottom plate **114** forms a lower surface of the camera module **10** or the rear body **110,** and can be connected to lower surfaces of the four first side plates **112.** A connector lead-out portion **119** having a shape being protruded downwardly more than other areas can be disposed on a lower surface of the bottom plate **114.** A connector **390,** which will be described later, can be disposed on an inner side of the connector lead-out portion **119.** The lower surface of the connector lead-out portion **119** can be protruded downwardly more than a lower surface of the bottom plate **114.** An external terminal can be coupled to the connector lead-out portion **119,** and accordingly, the camera module **10** can be electrically connected to the external terminal through the connector **390.** Through the external terminal, the camera module **10** can be supplied with power, or can transmit and receive electrical signals related to the operation of the camera module **10.**

A sealing member **392** (see FIG. 3) may be disposed between the inner surface of the connector lead-out portion **119** and the connector **390.** It is possible to prevent external foreign substances from being introduced into the space of the connector lead-out portion **119** through the sealing member **392.**

A coupling groove **111** having a shape recessed downward than other areas may be formed on an upper surface of the rear body **110.** The coupling groove **111** may be disposed at each of four corner areas of the rear body **110.** A screw hole may be formed in a bottom surface of the coupling groove **111** so that a screw penetrates therethrough. A coupling portion **170** of the front body **160** to be described later may be coupled to the coupling groove **111.** The coupling portion **170** may be screw-coupled to the coupling groove **111** through the screw.

The camera module **10** may include a front body **160.** The front body **160** may be referred to as one of a second body, an upper housing, and a second housing. A configuration formed by coupling the front body **160** and the rear body **110** may be referred to as a body or a housing. The front body **160** may form an inner space of the camera module **10** by coupling with the rear body **110.** The front body **160** may have a rectangular cross-sectional shape. The front body **160** may have a shape in which upper and lower surfaces are opened.

The front body **160** may include a body portion and a barrel portion **163** (see FIG. 3). The body portion may include a second side plate **162** and an upper plate **161.** The second side plate **162** may form a side surface of the front body **160.** The second side plate **162** may have a shape being bent from an edge of the upper plate **161** and extended downward. The second side plate **162** may include four side plates. Each of the four second side plates **162** may have a square plate shape. An edge area adjacent to each of the plurality of second side plates **162** may be formed to be rounded. A lower surface of the second side plate **162** may be coupled to an upper surface of the first side plate **112.**

The sealing member **400** may be disposed between the second side plate **162** and the first side plate **112.** The sealing member **400** may be formed to correspond to a cross-sectional shape of a lower surface of the front body **160** and an upper surface of the rear body **110** to prevent external foreign substances from being introduced into the space within the camera module **10.**

The upper plate **161** may form an upper surface of the front body **160.** The upper plate **161** may be connected to upper ends of the four second side plates **162.** The barrel portion **163** may be disposed on the upper plate **161.** The barrel portion **163** may be formed to be protruded upward from an upper surface of the upper plate **161** compared to other areas. The barrel portion **163** may have a circular cross-sectional shape. A space, to which the lens module **130** is coupled, may be formed within the barrel portion **163.**

The coupling portion **170** may be disposed on a lower surface of the front body **160.** The coupling portion **170** may have a shape being protruded downward from a lower surface of the front body **160** than other areas. The coupling portion **170** may be disposed at corner areas of the front body **160,** which are areas in which the plurality of second side plates **162** are adjacent to each other. A screw hole through which a screw penetrates may be formed on a lower surface of the coupling part **170.** The coupling portion **170** may be coupled to the coupling groove **111** of the rear body **110.**

A protrusion **180** may be disposed on a lower surface of the front body **160** to be protruded downward than other areas. The protrusion **180** may be disposed within the coupling portion **170.** At least a portion of the protrusion **180** may be disposed in a space within the rear body **110.** A lower end of the protrusion **180** may be disposed below a lower end of the coupling portion **170.** A lower surface of the protrusion **180** may be coupled to an upper surface of the substrate module **300.** A lower surface of the protrusion **180** may be coupled to an upper surface of a first substrate **310** of the substrate module **300** to be described later. An adhesive member (not shown) may be disposed between a lower surface of the protrusion **180** and the upper surface of the first substrate **310.** The adhesive member may be epoxy. By adjusting the thickness of the adhesive member, the length in an optical axis direction between the image sensor **312** and the lens module **200** to be described later may be adjusted.

The camera module **10** may include a lens module **200.** At least a portion of the lens module **200** may be coupled to a space within the front body **160,** and another portion thereof may be protruded upward from the front body **160.** A hole, to which the lens module **200** is coupled, is formed in an upper surface of the front body **160,** and the lens module **200** may be coupled to the hole. At least a portion of the lens module **200** may be disposed to be overlapped the front body **160** in a direction perpendicular to the optical axis direction.

The lens module **200** may include a lens barrel **210** and at least one lens **220** being disposed within the lens barrel **210.** The lens barrel **210** may have a circular cross-sectional shape. The lens barrel **210** may have a cylindrical shape with an open upper surface and a lower surface. The lens barrel **210** may have a plurality of areas having different cross-sectional areas. A screw thread or a screw groove may be formed on an outer circumferential surface of the lens barrel **210.** A screw groove or a screw thread may be formed on an inner surface of the space within the front body **160** facing an outer circumferential surface of the lens barrel **210.** Accordingly, the lens barrel **210** may be screw-coupled into the front body **160.**

A groove **232** having a shape being recessed inward than that of other areas may be formed on an outer circumferential surface of the lens barrel **210.** A sealing member **280** may be coupled to the groove **232.** The sealing member **280** has a cross section of a ring shape and may be disposed between an outer circumferential surface of the lens barrel **210** and an inner surface of the front body **160.** Therefore, it is possible to prevent foreign substances from being introduced into the space within the camera module **10.**

A flange **230** being protruded more outwardly than other areas may be formed on an outer circumferential surface of the lens barrel **210.** When the lens module **200** is coupled to the front body **100,** the lower surface of the flange **230** may be disposed on an upper surface of the barrel portion **163.** Accordingly, the coupling area of the lens module **200** within the front body **100** may be guided.

The lens **220** may be disposed within the lens barrel **210.** A plurality of lenses **220** may be provided and disposed within the lens barrel **210** to be spaced apart from each other in the optical axis direction. The lens **220** may be disposed to face the image sensor **312** in an optical axis direction.

The camera module **10** may include the substrate module **300.** The substrate module **300** may be disposed in a space within the camera module **10.** The substrate module **300** may be disposed in a space within the rear body **110.** The substrate module **300** may include a first substrate **310,** a second substrate **320,** a connection substrate (not shown), and a shield member **340.**

The first substrate **310** may be a printed circuit board (PCB). The first substrate **310** may be coupled to an image sensor **312.** The image sensor **312** may be disposed on the first substrate **310** to face the lens module **200** in an optical axis direction. A protrusion **180** of the front body **160** may be coupled to an upper surface of the first substrate **310** in the presence of an adhesive member.

The first substrate **310** may include four side surfaces. The first substrate **310** may include four corners connecting a plurality of adjacent side surfaces. Each of the four corners may have a groove shape being formed to be recessed inward than other areas. Each of the four corners may have a curved surface.

The second substrate **320** may be a printed circuit board (PCB). The second substrate **320** may be disposed to be spaced apart from the first substrate **310** in an optical axis direction. The second substrate **320** may be disposed below the first substrate **310.** The connector **390** may be coupled to a bottom surface of the second substrate **320.** An upper end of the connector **390** may be mounted on a bottom surface of the second substrate **320.**

The second substrate **320** may be electrically connected to the first substrate **310.** The second substrate **320** and the first substrate **310** may be electrically connected through the connection substrate. The connection substrate may be a flexible circuit board (FPCB). Upper and lower ends of the connection substrate may be coupled to the first substrate **310** and the second substrate **320,** respectively.

The second substrate **320** may include four side surfaces. The second substrate **320** may include four corners connecting a plurality of adjacent side surfaces. Each of the four corners may have a groove shape being formed to be more recessed inward than other areas. Each of the four corners may have a curved surface.

A groove **325** (refer to FIG. 7) and a protrusion **322** (refer to FIG. 4) may be formed on a side surface of the second substrate **320.** The groove **325** may have a shape being recessed more inwardly toward than other areas from a side surface of the second substrate **320.** The groove **325** may be formed on three of the side surfaces of the second substrate **320.** For example, when a side surface of the second substrate **320** includes a first side surface, a second side surface facing the first side surface, a third side surface connecting the first side surface and the second side surface, and a fourth side surface facing the third side surface, the grooves **325** may be formed on a first to third side surfaces, respectively.

The protrusion **322** may have a shape being protruded outward from a bottom surface of the groove **325.** The protrusion **322** may be formed on three of the side surfaces of the second substrate **320** corresponding to the area in which the groove **325** is formed. The protrusion **322** may have a rectangular cross-sectional shape, but there is no limitation on the cross-sectional shape of the protrusion **322.**

The shield member **340** may fix the first substrate **310** and the second substrate **320.** At least a portion of the shield member **340** may be disposed between the first substrate **310** and the second substrate **320.** The shield member **340** may be coupled to the first substrate **310** and the second substrate **320.** The first substrate **310** and the second substrate **320** may be disposed to be spaced apart from each other with respect to an optical axis direction through the shield member **340.** The shield member **340** may be formed of a metal material. The shield member **340** may be referred to as a shield can.

The shield member **340** may include a fence portion **342,** a coupling portion **350,** and a contact portion **356.**

The fence portion **342** may be disposed between the first substrate **310** and the second substrate **320.** The first substrate **310** and the second substrate **320** may be spaced apart from each other in an optical axis direction through the fence portion **342.** An upper surface of the fence portion **342** may support a lower surface of the first substrate **310,** and a lower surface of the fence portion **342** may support an upper surface of the second substrate 320.

A rib **343** may be formed on an upper surface of the fence portion **342** to be protruded more upward than other areas. Through the rib **343,** an upper surface of the fence portion **342** may be coupled to a lower surface of the first substrate **310** by surface mounting technology (SMT).

A support portion **346** being in contact with an upper surface of the second substrate **320** may be disposed on a bottom surface of the fence portion **342.** The support portion **346** may be coupled with an upper surface of the corner area of the second substrate **320.** The support portion **346** may include a curved surface to correspond to the shape of a corner area of the second substrate **320.**

The coupling portion **350** may have a shape being protruded downward from a bottom surface of the fence portion **342.** The coupling portion **350** may be disposed to be overlapped with the second substrate **320** in a direction perpendicular to the optical axis direction. The coupling portion **350** may be coupled to the groove **325** of the second substrate **320.** As illustrated in FIG. 6, the length of the groove **325** may be longer than the length of the coupling portion **350** with respect to a first direction **X** perpendicular to an optical axis direction **Y.**

The coupling portion **350** may include a coupling hole **353.** The coupling hole **353** may have a shape penetrating from an inner surface to an outer surface of the coupling portion **350.** A protrusion **322** of the second substrate **320** may be coupled to the coupling hole **353.** At least a portion of the protrusion **322** may be protruded toward an outer side of the coupling portion **350** by penetrating the coupling hole **353.** The coupling hole **353** may have a rectangular cross-sectional shape. For example, the coupling hole **353** may include a first surface forming an inner surface, a second surface facing the first surface, a third surface connecting the first surface and the second surface, and a fourth surface facing the third surface and connecting the first surface and the second surface. Here, the first surface and the second surface may have lengths smaller than those of the third surface and the fourth surface.

The cross-sectional area of the coupling hole **353** may be larger than the cross-sectional area of the protrusion **322.** At least a portion of the protrusion **322** may be spaced apart from an inner surface of the coupling hole **353.** When a surface of the protrusion **322** facing an inner surface of the coupling hole **353** is referred to as an outer surface, the outer surface of the protrusion **322** may include an area being spaced apart from an inner surface of the coupling hole **353.**

As illustrated in FIG. 6, the length **L1** in a first direction **X** of the protrusion **322** may be less than the length **L2** in a first direction **X** of the coupling hole **353.** The length **L1** in a first direction **X** of the protrusion **322** may be equal to or less than 0.4 mm to 0.6 mm of the length **L2** in a first direction **X** of the coupling hole **353.**

The length **L3** of the protrusion **322** in a second direction **Y** perpendicular to the first direction **X** and in an optical axis direction may be less than the length **L4** of the coupling hole **353** in a second direction **Y.** The length **L3** of the protrusion **322** in a second direction **Y** may be 0.2 mm to 0.3 mm less than the length **L4** in a second direction **Y** of the coupling hole **353.**

The protrusion **322** may be in contact with any one of inner surfaces of the coupling hole **353.** For example, an outer surface of the protrusion **322** may be in contact with a third surface of the coupling hole **353,** and may be spaced apart from a first surface, a second surface, and a fourth surface.

As illustrated in FIG. 2, the rear body **110** according to the present embodiment may be coupled to a rear surface of the front body **160** in a state in which the connector **390** is coupled to a lower surface of the second substrate **320.** When the rear body **110** is coupled, a process of inserting the connector **390** into the connector lead-out portion **119** may be included. In this case, when the assembly tolerance between the substrate module **300** and the front body **160** or the assembly tolerance of the substrate module **300** occurs, insertion of the connector **390** into the connector lead-out portion **119** may not be easy, or damage to the substrate module **300** may occur during the insertion process of the connector **390.** However, according to the present embodiment, since the second substrate **320** to which the connector **390** is coupled may move a predetermined distance in multiple directions through the separation space between the coupling hole **353** in the shield member **340** and the protrusion **322** of the second substrate **320,** the connector lead-out portion **119** and the connector **390** may be more easily coupled.

Meanwhile, as illustrated in FIG. 6, a slit **354** having a shape being recessed more upward than other areas may be formed in an area of a lower surface of the fence portion **342,** which is connected to an upper end of the coupling portion **350.** The slits **354** may be disposed at both sides of an upper end of the coupling portion **350,** respectively. The slit **354** may include a curved surface. Through the slit **354,** the coupling portion **350** and the contact portion **356** may be easily bent with respect to the fence portion **342.**

The coupling portion **350** may be disposed on a lower end of three surfaces of the fence portion **342** having a rectangular cross-sectional shape. In this case, the connection substrate may be disposed on a surface of the fence portion **342** in which the coupling portion **350** is not disposed. The shield member **340** may include a support plate **360** being bent inward from a lower end of a side surface of the fence portion **342** in which the coupling portion **350** is not formed to support the connection substrate. The connection substrate may be supported by a lower surface of the support plate **360.**

The contact portion **356** may be extended downward from a lower end of the coupling portion **350.** At least a portion of the contact portion **356** may come into contact with an inner surface of the rear body **110.** The contact portion **356** may include a first area **367** being extended downward from a lower end of the coupling portion **350** and a second area **368** being extended downward from a lower end of the first area **367.** The first area **367** may be obliquely disposed so that a distance to an inner surface of the rear body **110** becomes closer as it goes downward. The second area **368** may be obliquely disposed so that a distance to an inner surface of the rear body **110** increases as it goes downward. The first area **367** and the second area **368** may be disposed to form a predetermined angle.

A bending portion **369** of which an outer surface is in contact with an inner surface of the rear body **110** may be formed between the first area **367** and the second area **368.** The bending portion **369** may be disposed to press an inner surface of the rear body **110.**

The contact portion **356** may have an elastic force outwardly, which is a direction of pressing an inner surface of the rear body **110.** In some cases, the coupling portion **350** may also have an elastic force outwardly with respect to a lower end of the fence portion **342** together with the contact portion **356.** The length of the bending portion **369** being protruded from a side surface of the second substrate **320** before the rear body **110** is coupled may be greater than length of the bending portion **369** being protruded from a side surface of the second substrate **320** after the rear body **110** is coupled. An outer surface of the bending portion **369** in a state in which the rear body **110** is coupled may press the inner surface of the rear body **110** by an elastic force.

According to the above-described structure, when the rear body **110** is coupled, the coupling portion **350** may be coupled to the groove **325** of the second substrate **320** by a contact between the inner surface of the rear body **110** and the bending portion **369.** In addition, there is an advantage that the coupling state of the substrate module **300** may be more firmly maintained within the rear body **110.**

Meanwhile, the ground structure of the substrate module **300** may be implemented by the contact between the shield member **340** and the rear body **110.**

In the above description, it is described that all the components constituting the embodiments of the present invention are combined or operated in one, but the present invention is not necessarily limited to these embodiments. In other words, inside the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas inside the equivalent scope should be interpreted as being included in the scope of the present invention.

## Claims

1. A camera module comprising:
a front body including a hole;
a lens module having at least a portion thereof coupled to the hole;
a rear body coupled to a rear surface of the front body; and
a substrate module disposed within the rear body,
wherein the substrate module comprises:
a first substrate on which an image sensor is disposed;
a second substrate disposed at the rear of the first substrate; and
a shield member coupled to the first substrate and the second substrate,
wherein a protrusion is formed on a side surface of the second substrate,
wherein the shield member includes a coupling hole into which the protrusion is coupled, and
wherein a cross-sectional area of the protrusion is smaller than a cross-sectional area of the coupling hole.

2. The camera module according to claim 1,
wherein an inner surface of the coupling hole includes:
a first surface;
a second surface disposed opposite to the first surface;
a third surface connecting the first surface and the second surface; and
a fourth surface connecting the first surface and the second surface and opposite to the third surface, and
wherein an outer surface of the protrusion is in contact with any one surface among the first to fourth surfaces.

3. The camera module according to claim 2,
wherein the outer surface of the protrusion is spaced apart from any one among the first to fourth surfaces and the other three surfaces.

4. The camera module according to claim 1,
wherein the shield member includes: a fence portion disposed between the first substrate and the second substrate; and
a coupling portion protruded downward from a lower end of the fence portion and having the coupling hole formed therein,
wherein a groove into which the coupling portion is coupled is formed on a side surface of the second substrate, and
wherein the protrusion is disposed on a bottom surface of the groove.

5. The camera module according to claim 4,
wherein on an outside of an area connected to an upper end of the connecting portion among a lower surface of the fence portion, a slit having a shape recessed upward more than other areas is disposed.

6. The camera module according to claim 4, including:
a contact portion extended downward from a lower end of the coupling portion and in contact with an inner surface of the rear body.

7. The camera module according to claim 4,
wherein the contact portion comprises:
a first area extended downwardly from a lower end of the coupling portion;
a second area extended downwardly from a lower end of the first area; and
a bending portion disposed between the first area and the second area and in contact with an inner surface of the rear body.

8. The camera module according to claim 7,
wherein the contact portion has elasticity such that an outer surface of the bending portion presses an inner surface of the rear body.

9. The camera module according to claim 7,
wherein the first area is disposed so as to be inclined so that the distance to an inner surface of the rear body becomes closer as it goes downward, and
wherein the second area is disposed so as to be inclined so that the distance to an inner surface of the rear body becomes farther as it goes downward.

10. The camera module according to claim 1,
wherein a length of the protrusion in a first direction is 0.4 mm to 0.6 mm or less of a length of the coupling hole in a first direction, and
wherein a length of the protrusion in a second direction perpendicular to the first direction is 0.2 mm to 0.3 mm or less of a length of the coupling hole in a second direction.
